(19) Europäisches Patentamt / European Patent Office / Office européen des brevets

(11) **EP 4 395 423 B1**

(12) **EUROPEAN PATENT SPECIFICATION**

(45) Date of publication and mention
of the grant of the patent:
**27.08.2025  Bulletin 2025/35**

(21) Application number: **22894833.7**

(22) Date of filing: **16.11.2022**

(51) International Patent Classification (IPC):
*H04W 52/02* *(2009.01)*    *H04W 72/02* *(2009.01)*
*H04W 76/14* *(2018.01)*    *H04W 72/0446* *(2023.01)*
*H04W 92/18* *(2009.01)*    *H04W 72/40* *(2023.01)*
*H04W 72/25* *(2023.01)*

(52) Cooperative Patent Classification (CPC):
**H04W 52/02; H04W 72/02; H04W 76/14;**
H04W 72/0446; H04W 72/40; H04W 72/569;
H04W 76/28; H04W 92/18; Y02D 30/70

(86) International application number:
**PCT/CN2022/132245**

(87) International publication number:
**WO 2023/088301 (25.05.2023 Gazette 2023/21)**

(54) **RESOURCE SELECTION METHOD AND APPARATUS, AND TERMINAL**

RESSOURCENAUSWAHLVERFAHREN UND -VORRICHTUNG SOWIE ENDGERÄT

PROCÉDÉ ET APPAREIL DE SÉLECTION DE RESSOURCE, ET TERMINAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.11.2021  CN 202111387553**

(43) Date of publication of application:
**03.07.2024  Bulletin 2024/27**

(73) Proprietor: **CICT Connected and Intelligent
Technologies Co., Ltd.
Chongqing 400041 (CN)**

(72) Inventors:
• **WEN, Xiaoran**
  **Chongqing 400040 (CN)**
• **ZHAO, Rui**
  **Chongqing 400040 (CN)**
• **LI, Chenxin**
  **Chongqing 400040 (CN)**

(74) Representative: **Murgitroyd & Company
165-169 Scotland Street
Glasgow G5 8PL (GB)**

(56) References cited:
WO-A1-2021/138789    WO-A1-2021/194693
CN-A- 107 241 786    CN-A- 112 673 697
CN-A- 113 099 518    US-A1- 2021 037 468

• OPPO: "Discussion on DRX left issues", vol.
RAN WG2, no. E-meeting; 20211101, 22 October
2021 (2021-10-22), XP052065902, Retrieved from
the Internet <URL:https://ftp.3gpp.org/tsg_ran/
WG2_RL2/TSGR2_116-e/Docs/R2-2109415.zip
R2-2109415- Discussion on DRX left
issues.docx> [retrieved on 20211022]
• HUAWEI, HISILICON: "Discussion on SL
communication impact on Uu DRX", 3GPP
DRAFT; R2-2104113, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no. Electronic
Meeting; 20210412 - 20210420, 2 April 2021
(2021-04-02), Mobile Competence Centre ; 650,
route des Lucioles ; F-06921 Sophia-Antipolis
Cedex ; France, XP052175377

**Description**

TECHNICAL FIELD

The present disclosure relates to the field of communication technologies, and in particular, to a resource selection method and apparatus, and a terminal.

BACKGROUND

In a discontinuous reception (Discontinuous Reception, DRX for short) mechanism of a Uu interface (an interface between UE and a terrestrial radio access network) in related technologies, user equipment (User Equipment, UE) monitors a physical downlink control channel (Physical Downlink Control Channel, PDCCH for short) in all subframes within DRX-On Duration (duration), and enters a power saving mode in a DRX-off phase and does not monitor a PDCCH subframe. However, in a sidelink (sidelink, SL), a resource pool of receiving UE may include a resource that cannot be used in sidelink transmission, for example, a slot used for a synchronization signal, a slot used for non-uplink transmission, or a reserved slot. If there are not sufficient effective resources that can be used in sidelink transmission within DRX on duration due to existence of such slot, there is no resource for transmitting UE to select. As a result, timely and reliable service transmission cannot be ensured. Therefore, in consideration of impacts on data reception of UE from resources that can be actually used in SL transmission in the resource pool, when the DRX mechanism is introduced into the sidelink, a resource selection mechanism and the DRX mechanism need to be enhanced to save power and further ensure reliable service transmission. WO2021/138789A1 provides a method to support discontinuous channel/SCI monitoring (DRX) over Sidelink in mobile communication system. When a V2X-UE would like to perform sidelink communication with its peer UE, but does not know whether its peer UE is monitoring SCI or is in non-active time (e.g. turn off the radio for PC5 interface), UE send a ping message to check the status of its peer UE. If there is no response to the ping message, the UE assumes that its peer UE is not in active time, and therefore postpone the sidelink communication until the start of the next sidelink on duration of its peer UE.

SUMMARY

The invention is set out in the appended set of claims.

BRIEF DESCRIPTION OF THE DRAWINGS

FIG. 1 shows a basic principle of DRX.

FIG. 2 is a flowchart of a resource selection method according to a claimed embodiment.

FIG. 3 is a schematic flowchart 1 of a time sequence relationship between DRX and sidelink transmission.

FIG. 4 is a schematic flowchart 2 of a time sequence relationship between DRX and sidelink transmission.

FIG. 5 is a schematic flowchart 3 of a time sequence relationship between DRX and sidelink transmission.

FIG. 6 is a schematic flowchart 4 of a time sequence relationship between DRX and sidelink transmission.

FIG. 7 is a schematic flowchart 5 of a time sequence relationship between DRX and sidelink transmission.

FIG. 8 is a schematic flowchart 6 of a time sequence relationship between DRX and sidelink transmission.

FIG. 9 is a schematic flowchart 7 of a time sequence relationship between DRX and sidelink transmission.

FIG. 10 is a schematic flowchart 8 of a time sequence relationship between DRX and sidelink transmission.

FIG. 11 is a schematic flowchart 9 of a time sequence relationship between DRX and sidelink transmission.

FIG. 12 is a block diagram of a resource selection apparatus.

FIG. 13 is a structural block diagram of a terminal according to a claimed embodiment.

## DETAILED DESCRIPTION OF THE EMBODIMENTS

The invention is defined by the appended claims. To make the technical problems to be resolved, technical solutions, and advantages of the present disclosure clearer, the present disclosure is described following in detail with reference to the accompanying drawings and specific embodiments. In the following description, specific details such as specific configurations and components are provided only to help fully understand the embodiments of the present disclosure. In addition, for clarity and simplicity, descriptions of known functions and constructions are omitted.

It should be understood that, "one embodiment" or "an embodiment" throughout this specification means that specific features, structures, or characteristics related to the embodiments may be included in at least one embodiment of the present disclosure. Therefore, descriptions of "in one embodiment" or "in an embodiment" throughout this specification do not necessarily indicate a same embodiment. In addition, the specific features, structures, or characteristics may be combined in one or more embodiments in any appropriate manner.

In the embodiments of the present disclosure, it should be understood that, sequence numbers of the following processes do not mean execution sequences. The execution sequences of the processes should be determined according to functions and internal logic of the processes, and should not be construed as any limitation on the implementation processes of the embodiments of the present disclosure.

In addition, terms "system" and "network" in this specification may often be used interchangeably.

In the embodiments of the present application, it should be understood that, "B that is corresponding to A" means that B is associated with A, and B can be determined based on A. However, it should be further understood that determining B based on A does not mean that B is determined based on only A. B may alternatively be determined based on A and/or other information.

In the embodiments of the present disclosure, a form of an access network is not limited, and may be an access network including a macro base station (Macro Base Station), a pico base station (Pico Base Station), nodeB (a name of a mobile base station in 3rd generation (3rd-Generation, 3G) mobile communication technologies), an enhanced nodeB (eNB), a home enhanced nodeB (Femto eNB, Home eNodeB, Home eNB, or HeNB), a relay station, an access point, an RRU (Remote Radio Unit, remote radio unit), an RRH (Remote Radio Head, remote radio head), and the like. A user terminal may be a mobile phone (or a smart phone), or another device that can transmit or receive a wireless signal, including user equipment, a personal digital assistant (Personal Digital Assistant, PDA), a wireless modem, a wireless communication apparatus, a handheld apparatus, a laptop computer, a cordless phone, a wireless local loop (Wireless Local Loop, WLL) station, CPE (Customer Premise Equipment, customer premise equipment) or a mobile smart hotspot that can convert a mobile signal into a Wi-Fi signal, a smart home appliance, or a device that can communicate with a mobile communication network spontaneously without being operated by anyone.

The following first describes related content of the solutions provided in the embodiments of the present application.

I. DRX

1. Basic principle

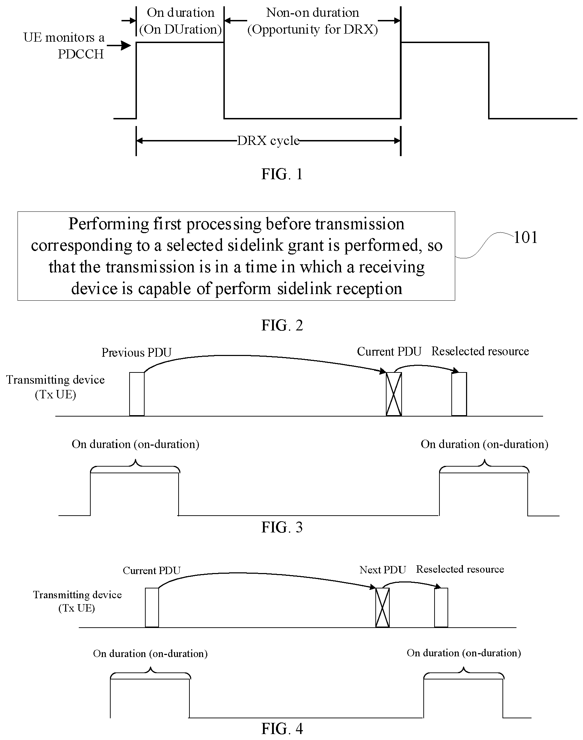

The basic principle of DRX is shown in FIG. 1. On duration (on duration) indicates a time period in which terminal UE monitors a control channel. In this time period, a radio frequency channel is enabled, and the control channel is continuously monitored. In a time other than the on duration, the UE may no longer monitor the control channel, to save power. The on duration appears periodically (Cycle). A specific cycle is configured by a base station/preconfigured/configured by transmitting UE.

In a DRX mechanism of a Uu interface, an arrival model of a data service is considered. In other words, data packets arrive in a bursting manner (it may be understood as that a large quantity of packets arrive consecutively in a short time period once a data packet arrives). To adapt to this service arrival feature, a plurality of timers are used in a Uu DRX process, and the Uu DRX process is combined with a hybrid automatic repeat request (Hybrid Automatic Repeat reQuest, HARQ) process, to achieve better power saving performance.

2. Description of timers related to DRX

At a present stage, similar to Uu DRX, SL DRX also uses a plurality of timers. However, specific definitions of the timers related to the SL DRX are still under discussion currently. The following describes the timers related to Uu DRX as a reference.

(1) drx-onDurationTimer (DRX on duration timer): a time in which UE periodically monitors a control channel.

(2) drx-InactivityTimer (DRX inactivity timer): After DRX is configured, the timer is enabled when the UE receives control signaling of HARQ initial transmission in a time (Active Time) in which the UE is allowed to monitor the control channel. The UE continuously monitors the control channel before the timer expires. If the UE receives a control signaling of the HARQ initial transmission before drx-InactivityTimer expires, the UE terminates and restarts drx-InactivityTimer.

(3) HARQ RTT Timer (HARQ round-trip time timer) is classified into drx-HARQ-RTT-TimerDL and drx-HARQ-RTT-TimerUL, a purpose is to make it possible for UE to not monitor the control channel before next retransmission arrives, to achieve better power saving effect. Downlink is used as an example. A first symbol after PUCCH transmission for a UE-related process starts to enable this timer. If data in a corresponding HARQ process is not successfully decoded after previous HARQ transmission (the UE feeds back a negative acknowledgment (Negative Acknowledgment, NACK)), the UE enables drx-RetransmissionTimerDL after drx-HARQ-RTT-TimerDL expires. If data in a corresponding HARQ process is successfully decoded after previous HARQ transmission (the UE feeds back an acknowledgment (Acknowledgment, ACK)), the UE does not enable drx-RetransmissionTimerDL after the drx-HARQ-RTT-TimerDL timer expires. If only drx-HARQ-RTT-TimerDL runs currently, the UE does not monitor the control channel.

(4) HARQ retransmission Timer is classified into drx-RetransmissionTimerDL and drx-RetransmissionTimerUL. Downlink is used as an example. When drx-RetransmissionTimerDL runs, the UE monitors control signaling and waits for retransmission scheduling of the corresponding HARQ process.

3. Definition of an active time (active time) in DRX

Currently, SL DRX is determined. If any timer of drx-onDurationTimer, drx-RetransmissionTimer, and drx-Inactivity Timer runs currently, the UE monitors a PSCCH and 2nd sidelink control information (Sidelink Control Information, SCI). A time in which the UE monitors the PSCCH and the 2nd SCI is also referred to as an active time.

In an LTE system, an active time in Uu DRX is affected by other factors in addition to the DRX timer. However, currently, in addition to the foregoing timers, other factors that affect an active time in SL DRX are not determined in SL DRX.

An active time of the UE in LTE Rel-8 includes the following times:

(1) a running time of the DRX on duration timer (drx-onDurationTimer), the DRX inactivity timer (drx-InactivityTimer), the DRX downlink retransmission timer (drx-RetransmissionTimerDL), the DRX uplink retransmission timer (drx-RetransmissionTimerUL), or a contention resolution timer (ra-ContentionResolutionTimer);

(2) a time in which the UE waits for the base station to transmit a PDCCH (Physical Downlink Control Channel, physical downlink control channel) after transmitting an uplink scheduling request SR (Scheduling Request); and

(3) a time in which UE in contention free random access waits for a physical downlink control channel (Physical Downlink Control Channel, PDCCH for short) scheduled by using a C-RNTI after receiving a random access response (Random Access Response, RAR for short).

II. Sidelink SL resource pool

A higher layer may configure one or more SL resource pools for the UE. The SL resource pool may be used for PSSCH transmission or PSSCH reception.

A slot set that may belong to a PSSCH resource pool in time domain may be represented as $(t_0^{SL}, t_1^{SL}, \cdots, t_{T_{max}-1}^{SL})$, where $0 \leq t_i^{SL} < 10240 \times 2^{\mu}$, $0 \leq i < T_{max}$. A slot index is related to slot#0 (a slot 0) of a radio frame, and is corresponding to a system frame number sFN0 or DFN0 of a serving cell. Logical slots (slots) belonging to the set may be obtained by excluding the following three types of slots from all physical slots (slots determined based on a radio frame) in time domain:

(1) $N_{S\_SSB}$, a slot used for transmitting an S-SS/a PSBCH;

(2) $N_{nonSL}$, where when a PC5 interface shares a TDD carrier with the Uu interface, there is a slot including at least one symbol that is not an uplink symbol in $Y^{th}$ to $(Y+X-1)^{th}$ consecutive OFDM symbols, where Y and X are respectively configured by using high-layer parameters *sl-StartSymbol* and *sl-LengthSymbols, Sl-StartSymbol* may take a value from 0, 1, 2, 3, 4, 5, 6, and 7, and *sl-LengthSymbols* may take a value from 7, 8, 9, 10, 11, 12, 13, and 14; and

(3) a reserved slot, where remaining slots obtained after $N_{S\_SSB}$ and $N_{nonSL}$ are excluded are arranged in ascending order to obtain $(l_0, l_1, \cdots, l_{(10240 \times 2^{\mu} - N_{S\_SSB} - N_{nonSL} - 1)})$, and mapped according to a bitmap (bitmap), and a quantity of slots, in the remaining slots, that cannot be divided by the bitmap is a quantity of reserved slots, that is

$N_{reserved}$ = (10240 × 2$^\mu$ - N$_{SSSB}$ - N$_{nonSL}$) mod $L_{bitmap}$. Herein, $L_{bitmap}$ is a bitmap length indicated by the higher layer, and may take a value from {10, 11, 12, ..., 160}.

The reserved slots $l_r$ are evenly distributed to SFNs according to the following formula. Herein, $m$ = 0,1, ⋯ , $N_{reserved}$ - 1.

$$r = \left\lfloor \frac{m \cdot (10240 \times 2^\mu - N_{S\_SSB} - N_{nonSL})}{N_{reserved}} \right\rfloor$$

In the logical slots (that is, slots that can be used for sidelink transmission) obtained after the foregoing three types of slots are excluded, the UE determines, according to the following steps, a set of slots allocated to a resource pool.

(1) A bitmap ($b_0$, $b_1$, ... , $b_{L_{bitmap}-1}$) related to the resource pool is used, where $L_{bitmap}$ is the bitmap length indicated by the higher layer.

(2) If $b_{k'}$ = 1, a slot $t_k^{SL}$ (0 ≤ $k$ < 10240 × 2$^\mu$ - N$_{SSSB}$ - N$_{nonSL}$ - N$_{reserved}$) belongs to the set. In other words, the resource can be used in the resource pool, and is a logical slot in the resource pool, where $k'$ = $k$ mod $L_{bitmap}$.

(3) The logical slots in the resource pool are indexed again, so that a subscript i of remaining $t_i'^{SL}$ is consecutive {0, 1, ..., $T'_{max}$ - 1}}, where $T'_{max}$ is remaining slots in the set, that is, slots that can be used for sidelink transmission in the resource pool.

Herein, $\mu$ is a conversion parameter, that is, a parameter used for converting a time length into a quantity of slots, and is uniquely determined based on a subcarrier spacing (Sub-Carrier Spacing, SCS) of the resource pool. For details, refer to the following Table 1:

Table 1

| $\mu$ | $N_{symb}^{slot}$ | $N_{slot}^{frame,\mu}$ | $N_{slot}^{subframe,\mu}$ | SCS |
|---|---|---|---|---|
| 0 | 14 | 10 | 1 | 15 kHz |
| 1 | 14 | 20 | 2 | 30 kHz |
| 2 | 14 | 40 | 4 | 60 kHz |
| 3 | 14 | 80 | 8 | 120 kHz |
| 4 | 14 | 160 | 16 | 240 kHz |

A relationship between a subcarrier spacing (SCS) $\Delta f$ and $\mu$ is as follows:$\Delta f$ = 2$^\mu$ × 15 *[kHz]*.

In frequency domain, the SL resource pool includes numSubchannel consecutive subchannels. Each subchannel includes subchannelsize consecutive physical resource blocks (Physical Resource Block, PRB). Herein, numSubchannel and subchannelsize are parameters configured by the higher layer, and numSubchannel may take a value from {1, ..., 27}, and subchannelsize may take a value from 10, 12, 15, 20, 25, 50, 75, and 100.

The following describes the embodiments of the present application.

Specifically, the embodiments of the present disclosure provide a resource selection method and apparatus, and a terminal, to resolve a problem that timely and reliable service transmission cannot be ensured in related technologies.

Embodiment 1

As shown in FIG. 2, an embodiment of the present disclosure provides a resource selection method. The method is applied to a transmitting device and specifically includes the following steps.

Step 101: performing first processing before transmission corresponding to a selected sidelink grant is performed, so that the transmission is in a time in which a receiving device is capable of performing sidelink reception.

The receiving device includes one or more of following:

target user equipment for unicast communication of the transmitting device;
user equipment in a same group as the transmitting device;
user equipment in a specific communication range with the transmitting device;

user equipment that can potentially receive, in a broadcast communication mode, a service transmitted by the transmitting device; and

user equipment that is expected to receive a service transmitted by the transmitting device.

In this step, when the receiving device enables a sidelink DRX operation, the transmitting device may perform first processing before performing the transmission corresponding to the selected sidelink grant, to determine whether the transmission corresponding to the selected sidelink grant is in the time of the sidelink reception; and perform resource reselection based on a result of the determining. Resource reselection may include resource reselection for transmission or reselection of a resource pool.

It should be noted that the transmission is corresponding to a transport block (transport block, TB for short) at a physical layer, a MAC PDU at a MAC layer, a PDCP service data unit (SDU, Service Data Unit) at a packet data convergence protocol (Packet Data Convergence Protocol, PDCP for short) layer, and a data packet at an application layer.

Specifically, performing first processing may include following four cases:

Case 1

Transmission resource reselection is triggered if the transmission corresponding to the selected sidelink grant is not in a discontinuous reception DRX active time of the receiving device.

Specifically, in this case, for different transmissions corresponding to sidelink grants, triggered resource reselection may include the following six manners.

In a first manner, if the transmission is corresponding to a current to-be-transmitted first MAC PDU, transmission resource reselection for the transmission of the first MAC PDU is triggered.

In this manner, if the current to-be-transmitted first MAC PDU corresponding to the selected sidelink grant is not in the discontinuous reception DRX active time of the receiving device, transmission resource reselection for the first MAC PDU is triggered.

For example, with reference to FIG. 3, the transmitting device (TX UE) determines that a transmission resource of the current to-be-transmitted first MAC PDU cannot fall within the DRX active time (active time) of the receiving UE, for example, cannot fall within on duration (on duration) in FIG. 3. In this case, the transmitting device triggers resource reselection, so that a reselected resource can fall within the DRX active time of the receiving UE.

In a second manner, if the transmission is corresponding to a current to-be-transmitted first MAC PDU, reselection of a resource not in the DRX active time in a transmission resource corresponding to the first MAC PDU is triggered.

In this manner, if the current to-be-transmitted first MAC PDU corresponding to the selected sidelink grant is not in the discontinuous reception DRX active time of the receiving device, reselection of the resource not in the DRX active time in the transmission resource corresponding to the first MAC PDU is triggered.

For example, the TX UE determines that at least one transmission of the current to-be-transmitted first MAC PDU cannot fall within the DRX active time of the receiving UE, for example, a third transmission cannot fall within on duration. In this case, resource reselection is set to be performed for the third transmission when the first MAC PDU is available, so that a reselected resource can fall within the DRX active time of the receiving UE.

In a third manner, if the transmission is corresponding to a next to-be-transmitted second MAC PDU, a value of a sidelink resource reselection counter is set to 1, and transmission resource reselection for the second MAC PDU is triggered when the second MAC PDU is available.

In this manner, if the next to-be-transmitted second MAC PDU corresponding to the selected sidelink grant is not in the discontinuous reception DRX active time of the receiving device, the value of the sidelink resource reselection counter is set to 1, and transmission resource reselection for the second MAC PDU is triggered when the second MAC PDU is available.

For example, as shown in FIG. 4, the TX UE determines that the next MAC PDU (the second MAC PDU) that is expected to be transmitted by using a periodically reserved resource cannot fall within the DRX active time of the receiving UE, for example, cannot fall within on duration in FIG. 4. Then the transmitting UE resets the value of the counter (counter) to 1, and sets resource reselection to be performed when the next MAC PDU is available. For example, a value of a resource retention probability P is set to 0, or a random number is not selected, and the resource retention probability P is directly compared with 1, so that a reselected resource can fall within the DRX active time of the receiving UE.

In a fourth manner, if the transmission is corresponding to a next to-be-transmitted second MAC PDU, a value of a sidelink resource reselection counter is set to 1, and reselection of a resource not in the DRX active time in a transmission resource of the second MAC PDU is triggered.

In this manner, if the next to-be-transmitted second MAC PDU corresponding to the selected sidelink grant is not in the discontinuous reception DRX active time of the receiving device, the value of the sidelink resource reselection counter is set to 1, and reselection of a resource not in the DRX active time in the transmission resource of the second MAC PDU is triggered.

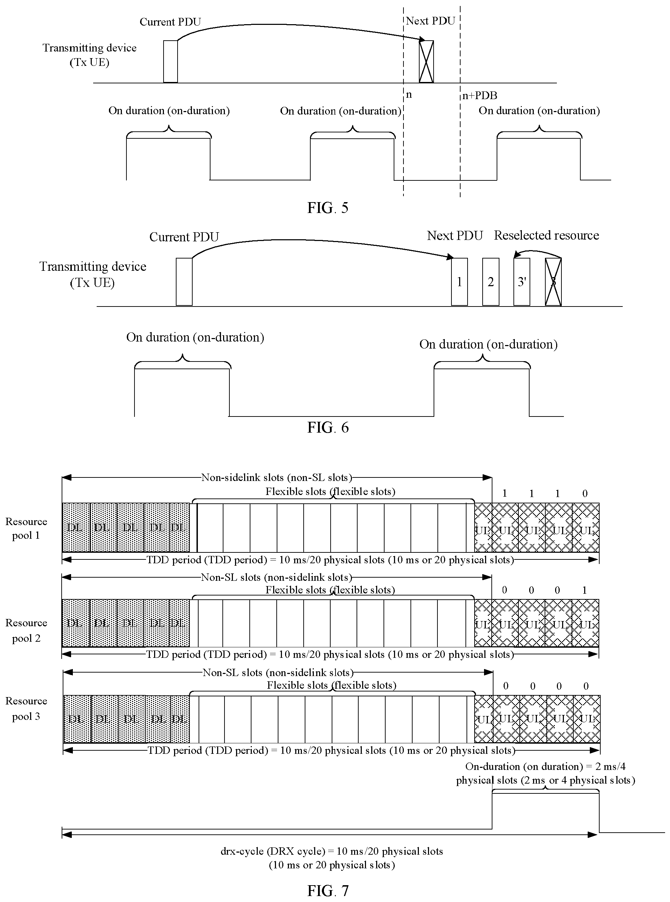

For example, with reference to FIG. 6, the TX UE determines that at least one transmission of the next MAC PDU (the second MAC PDU) that is expected to be transmitted by using a periodically reserved resource cannot fall within the DRX active time of the receiving UE. For example, a third transmission cannot fall within on duration in FIG. 6. In this case, the transmitting UE resets the value of the counter to 1, and sets resource reselection to be performed for the third transmission when the second MAC PDU is available, so that a reselected resource can fall within the DRX active time of the receiving UE.

In a fifth manner, if the transmission is corresponding to a next to-be-transmitted second MAC PDU, transmission resource reselection for the second MAC PDU is triggered when the second MAC PDU is available.

In this manner, if the next to-be-transmitted second MAC PDU corresponding to the selected sidelink grant is not in the discontinuous reception DRX active time of the receiving device, transmission resource reselection for the second MAC PDU is triggered when the second MAC PDU is available.

For example, as shown in FIG. 4, the TX UE determines that the next MAC PDU (the second MAC PDU) that is expected to be transmitted by using a periodically reserved resource cannot fall within the DRX active time of the receiving UE, for example, cannot fall within on duration in FIG. 4. Resource reselection is set to be performed when a next MAC PDU is available, so that a reselected resource can be in the DRX active time of the receiving UE.

In a sixth manner, if the transmission is corresponding to a next to-be-transmitted second MAC PDU, reselection of a resource not in the DRX active time in a transmission resource corresponding to the second MAC PDU is performed.

In this manner, if the next to-be-transmitted second MAC PDU corresponding to the selected sidelink grant is not in the discontinuous reception DRX active time of the receiving device, reselection of the resource not in the DRX active time in the transmission resource corresponding to the second MAC PDU is performed.

For example, with reference to FIG. 6, the TX UE determines that at least one transmission of the next MAC PDU (the second MAC PDU) that is expected to be transmitted by using a periodically reserved resource cannot fall within the DRX active time of the receiving UE, for example, a third transmission cannot fall within on duration in FIG. 6. In this case, resource reselection is set for the third transmission when the second MAC PDU is available, so that a reselected resource can fall within the DRX active time of the receiving UE.

Case 2

Transmission resource reselection is triggered if at least M transmission resources of the transmission corresponding to the selected sidelink grant are not in a DRX active time of the receiving device. Herein, $N \geq M \geq 1$, and N is a total quantity of transmissions of the transmission corresponding to the selected sidelink grant.

In this case, the selected sidelink grant is corresponding to a plurality of MAC PDUs. One MAC PDU includes N transmissions in total, that is, includes N transmission resources. Transmission resource reselection is triggered if the at least M transmission resources in the N transmission resources are not in the DRX active time of the receiving device. Herein, a value of M may be preconfigured.

Specifically, in this case, for different transmissions corresponding to sidelink grants, triggered resource reselection may include the following six manners.

In a first manner, if the transmission is corresponding to a current to-be-transmitted first MAC PDU, transmission resource reselection for the first MAC PDU is triggered.

In this manner, if at least M transmission resources of the current to-be-transmitted first MAC PDU corresponding to the selected sidelink grant are not in the discontinuous reception DRX active time of the receiving device, transmission resource reselection for the first MAC PDU is triggered.

In a second manner, if the transmission is corresponding to a current to-be-transmitted first MAC PDU, reselection of a resource not in the DRX active time in a transmission resource corresponding to the first MAC PDU is triggered.

In this manner, if at least M transmission resources of the current to-be-transmitted first MAC PDU corresponding to the selected sidelink grant are not in the discontinuous reception DRX active time of the receiving device, reselection of the resource not in the DRX active time in the transmission resource corresponding to the first MAC PDU is triggered.

In a third manner, if the transmission is corresponding to a next to-be-transmitted second MAC PDU, a value of a sidelink resource reselection counter is set to 1, and transmission resource reselection for the second MAC PDU is triggered when the second MAC PDU is available.

In this manner, if at least M transmission resources of the next to-be-transmitted second MAC PDU corresponding to the selected sidelink grant are not in the discontinuous reception DRX active time of the receiving device, the value of the sidelink resource reselection counter is set to 1, and transmission resource reselection for the second MAC PDU is triggered when the second MAC PDU is available.

In a fourth manner, if the transmission is corresponding to a next to-be-transmitted second MAC PDU, a value of a sidelink resource reselection counter is set to 1, and reselection of a resource not in the DRX active time in a transmission resource of the second MAC PDU is triggered.

In this manner, if at least M transmission resources of the next to-be-transmitted second MAC PDU corresponding to the selected sidelink grant are not in the discontinuous reception DRX active time of the receiving device, the value of the sidelink resource reselection counter is set to 1, and reselection of a resource not in the DRX active time in the transmission resource of the second MAC PDU is triggered.

In a fifth manner, if the transmission is corresponding to a next to-be-transmitted second MAC PDU, transmission resource reselection for the second MAC PDU is triggered when the second MAC PDU is available.

In this manner, if at least M transmission resources of the next to-be-transmitted second MAC PDU corresponding to the selected sidelink grant are not in the discontinuous reception DRX active time of the receiving device, transmission resource reselection for the second MAC PDU is triggered when the second MAC PDU is available.

In a sixth manner, if the transmission is corresponding to a next to-be-transmitted second MAC PDU, reselection of a resource not in the DRX active time in a transmission resource corresponding to the second MAC PDU is performed.

In this manner, if at least M transmission resources of the next to-be-transmitted second MAC PDU corresponding to the selected sidelink grant are not in the discontinuous reception DRX active time of the receiving device, reselection of the resource not in the DRX active time in the transmission resource corresponding to the second MAC PDU is performed.

Case 3

Transmission resource reselection is triggered if the transmission corresponding to the selected sidelink grant is not in a DRX active time of the receiving device, and a priority of the transmission is higher than or equal to a preset priority.

Specifically, in this case, for different transmissions corresponding to selected sidelink grants, triggered resource reselection may include the following six manners.

In a first manner, if the transmission is corresponding to a current to-be-transmitted first MAC PDU, transmission resource reselection for the first MAC PDU is triggered.

In this manner, if the current to-be-transmitted first MAC PDU corresponding to the selected sidelink grant is not in the discontinuous reception DRX active time of the receiving device, and a priority of the first MAC PDU is higher than or equal to a preset priority, transmission resource reselection for the first MAC PDU is triggered.

For example, with reference to FIG. 3, the transmitting device (TX UE) determines that a transmission resource of the current to-be-transmitted first MAC PDU cannot fall within the DRX active time (active time) of the receiving UE, for example, cannot fall within on duration (on duration) in FIG. 3. In this case, the transmitting UE further determines whether the priority of the first MAC PDU is higher than or equal to a preset threshold (the preset priority). If the priority of the first MAC PDU is higher than or equal to the preset threshold, the transmitting device triggers resource reselection to make a reselected resource fall within the DRX active time of the receiving UE, else the transmitting UE gives up this transmission.

In a second manner, if the transmission is corresponding to a current to-be-transmitted first MAC PDU, reselection of a resource not in the DRX active time in a transmission resource corresponding to the first MAC PDU is triggered.

In this manner, if the current to-be-transmitted first MAC PDU corresponding to the selected sidelink grant is not in the discontinuous reception DRX active time of the receiving device, and a priority of the first MAC PDU is higher than or equal to a preset priority, reselection of the resource not in the DRX active time in the transmission resource corresponding to the first MAC PDU is triggered.

For example, the TX UE determines that at least one transmission of the current to-be-transmitted first MAC PDU cannot fall within the DRX active time of the receiving UE, for example, a third transmission cannot fall within on duration. In this case, the transmitting UE further determines whether the priority of the first MAC PDU is higher than or equal to a preset threshold (the preset priority). If the priority of the first MAC PDU is higher than or equal to the preset threshold, resource reselection is set to be performed for the third transmission when the first MAC PDU is available to make a reselected resource fall within the DRX active time of the receiving UE, else the transmitting UE gives up this transmission.

In a third manner, if the transmission is corresponding to a next to-be-transmitted second MAC PDU, a value of a sidelink resource reselection counter is set to 1, and transmission resource reselection for the second MAC PDU is triggered when the second MAC PDU is available.

In this manner, if the next to-be-transmitted second MAC PDU corresponding to the selected sidelink grant is not in the discontinuous reception DRX active time of the receiving device, and the priority of the second MAC PDU is higher than or equal to a preset priority, the value of the sidelink resource reselection counter is set to 1, and transmission resource reselection for the second MAC PDU is triggered when the second MAC PDU is available.

For example, with reference to FIG. 4, the TX UE determines that the next MAC PDU (the second MAC PDU) that is expected to be transmitted by using a periodically reserved resource cannot fall within the DRX active time of the receiving UE, for example, cannot fall within on duration in the figure. The transmitting UE further determines whether the priority of the second MAC PDU is higher than or equal to a preset threshold (the preset priority). If the priority of the second MAC PDU is higher than or equal to the preset threshold, the transmitting UE resets the value of the counter to 1, and sets resource reselection to be performed when the next MAC PDU is available. For example, a value of a resource retention probability P is set to 0, or a random number is not selected, and the resource retention probability P is directly compared with 1, so that a reselected resource can be in the DRX active time of the receiving UE. If the priority of the second MAC PDU is not higher than or not equal to the preset threshold, the transmitting UE gives up the transmission of the second MAC PDU.

In a fourth manner, if the transmission is corresponding to a next to-be-transmitted second MAC PDU, a value of a sidelink resource reselection counter is set to 1, and reselection of a resource not in the DRX active time in a transmission resource of the second MAC PDU is triggered.

In this manner, if the next to-be-transmitted second MAC PDU corresponding to the selected sidelink grant is not in the discontinuous reception DRX active time of the receiving device, and a priority of the second MAC PDU is higher than or equal to a preset priority, the value of the sidelink resource reselection counter is set to 1, and reselection of a resource not in the DRX active time in a transmission resource of the second MAC PDU is triggered.

For example, with reference to FIG. 6, the TX UE determines that at least one transmission of the next MAC PDU (the second MAC PDU) that is expected to be transmitted by using a periodically reserved resource cannot fall within the DRX active time of the receiving UE, for example, a third transmission cannot fall within on duration in the figure. The transmitting UE further determines whether the priority of the second MAC PDU is higher than or equal to a preset threshold. If the priority of the second MAC PDU is higher than or equal to the preset threshold, the transmitting UE resets the value of the counter to 1, and sets resource reselection to be performed for the third transmission when the second MAC PDU is available, so that a reselected resource can fall within the DRX active time of the receiving UE. If the priority of the second MAC PDU is not higher than or not equal to the preset threshold, the transmitting UE gives up the transmission not in the DRX active time of the receiving UE.

In a fifth manner, if the transmission is corresponding to a next to-be-transmitted second MAC PDU, transmission resource reselection for the second MAC PDU is triggered when the second MAC PDU is available.

In this manner, if the next to-be-transmitted second MAC PDU corresponding to the selected sidelink grant is not in the discontinuous reception DRX active time of the receiving device, and a priority of the second MAC PDU is higher than or equal to a preset priority, transmission resource reselection for the second MAC PDU is triggered when the second MAC PDU is available. Otherwise, the transmitting UE gives up the transmission of the second MAC PDU.

For example, as shown in FIG. 4, the TX UE determines that the next MAC PDU (the second MAC PDU) that is expected to be transmitted by using a periodically reserved resource cannot fall within the DRX active time of the receiving UE, for example, cannot fall within on duration in FIG. 4. The transmitting UE further determines whether the priority of the second MAC PDU is higher than or equal to a preset threshold. If the priority of the second MAC PDU is higher than or equal to the preset threshold, resource reselection is set to be performed when the next MAC PDU is available, so that a reselected resource can be in the DRX active time of the receiving UE.

In a sixth manner, if the transmission is corresponding to a next to-be-transmitted second MAC PDU, reselection of a resource not in the DRX active time in a transmission resource corresponding to the second MAC PDU is performed.

In this manner, if the next to-be-transmitted second MAC PDU corresponding to the selected sidelink grant is not in the discontinuous reception DRX active time of the receiving device, and a priority of the second MAC PDU is higher than or equal to a preset priority, reselection of the resource not in the DRX active time in the transmission resource corresponding to the second MAC PDU is performed.

For example, with reference to FIG. 6, the TX UE determines that at least one transmission of the next MAC PDU (the second MAC PDU) that is expected to be transmitted by using a periodically reserved resource cannot fall within the DRX active time of the receiving UE, for example, a third transmission cannot fall within on duration in FIG. 6. The transmitting UE further determines whether the priority of the second MAC PDU is higher than or equal to a preset threshold. If the priority of the second MAC PDU is higher than or equal to the preset threshold, the transmitting UE performs resource reselection for the third transmission when the second MAC PDU is available to make a reselected resource fall within the DRX active time of the receiving UE, else the transmitting UE gives up the transmission of the second MAC PDU.

Case 4

Transmission resource reselection is triggered if the transmission corresponding to the selected sidelink grant is not in an available transmission resource pool of the transmitting device.

In this case, the transmission includes: all or a part of a quantity of transmissions of a current to-be-transmitted first MAC PDU, and/or all or a part of a quantity of transmissions of at least one subsequent to-be-transmitted second MAC PDU.

In this case, transmission resource reselection is triggered if one or more of the current to-be-transmitted first MAC PDU and the next to-be-transmitted second MAC PDU corresponding to the selected sidelink grant are not in the available transmission resource pool of the transmitting device. Resource reselection in this case includes resource pool reselection or resource reselection in the resource pool.

Specifically, in an embodiment, triggering transmission resource reselection includes one of following:

randomly selecting a resource pool from a candidate resource pool; and
selecting a resource pool with most logical slots from the candidate resource pool.

The candidate resource pool is a resource pool that includes a logical slot in the DRX active time. The logical slot is a slot that can be used for sidelink transmission. As shown in FIG. 7, UL represents a slot that can be used for SL transmission according to a TDD configuration. If a bitmap value is 1, it indicates that the slot is a logical slot in the resource pool. The transmitting UE sets a resource pool including a logical slot in a resource pool in on-duration of the receiving UE, that is, a resource pool 1 and a resource pool 2, as a candidate resource pool.

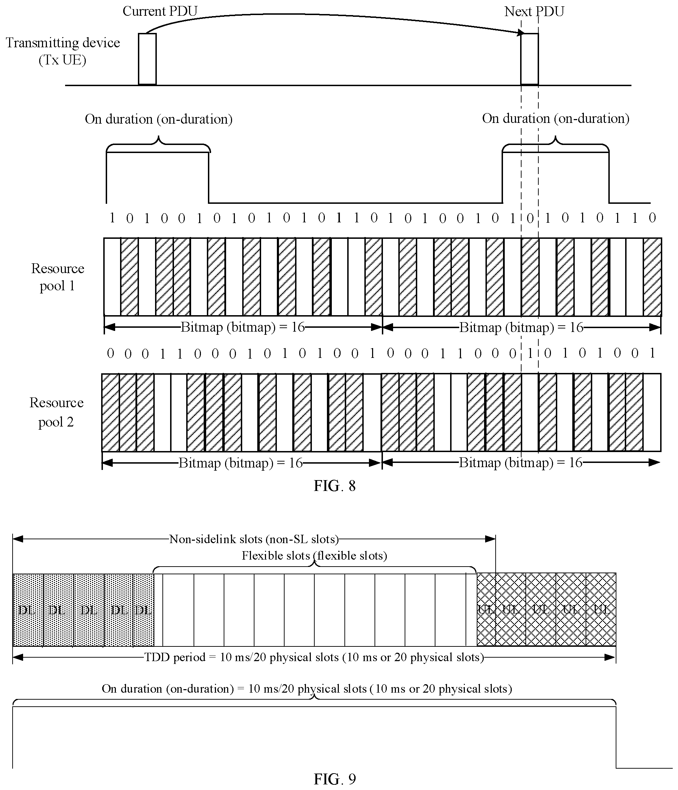

For example, with reference to FIG. 8, the TX UE determines that one or more of the current to-be-transmitted first MAC PDU and the next MAC PDU (the second MAC PDU) that is expected to be transmitted by using a periodically reserved resource are not in the available transmission resource pool of the transmitting device as shown in FIG. 8, the TX UE originally performs service transmission in the resource pool 1, but the transmitting UE triggers resource pool reselection because the next MAC PDU cannot fall into a logical slot of a resource pool in on duration shown in the figure, so that the next MAC PDU may fall into a logical slot of a resource pool in a reselected resource pool. For example, the reselected resource pool is the resource pool 2.

The available transmission resource pool of the transmitting device indicates that a resource pool is an available transmission resource pool if the transmission corresponding to the sidelink grant can be in a logical slot of the resource pool.

Case 5

Transmission resource reselection is triggered if the transmission corresponding to the selected sidelink grant is not in an available transmission resource pool of the transmitting device, and a priority of the transmission is higher than or equal to a preset priority.

The available transmission resource pool of the transmitting device indicates that a resource pool is an available transmission resource pool if the transmission corresponding to the sidelink grant can be in a logical slot of the resource pool.

In this case, the transmission corresponding to the sidelink grant includes: all or a part of a quantity of transmissions of a current to-be-transmitted first MAC PDU, and/or all or a part of a quantity of transmissions of at least one subsequent to-be-transmitted second MAC PDU. Resource reselection in this case includes resource pool reselection or resource reselection in the resource pool.

Specifically, in an embodiment, triggering transmission resource reselection includes one of following:

randomly selecting a resource pool from a candidate resource pool; and
selecting a resource pool with most logical slots from the candidate resource pool.

The candidate resource pool is a resource pool that includes a logical slot in the DRX active time. The logical slot is a slot that can be used for sidelink transmission. As shown in FIG. 7, UL represents a slot that can be used for SL transmission according to a TDD configuration. If a bitmap value is 1, it indicates that the slot is a logical slot in the resource pool. The transmitting UE sets a resource pool including a logical slot in a resource pool in on-duration of the receiving UE, that is, a resource pool 1 and a resource pool 2, as a candidate resource pool.

Case 6

It should be noted that transmission of the second MAC PDU is given up when there is no optional resource for the second MAC PDU in DRX on duration.

For example, as shown in FIG. 5, when the TX UE determines that the next MAC PDU (the second MAC PDU) that is expected to be transmitted by using the periodically reserved resource cannot fall within the DRX active time of the receiving UE, optionally, if any on-duration or any DRX active time is not included between an available moment (for example, n) of the second MAC PDU to a latest transmitting moment (for example, n+PDB) of the second MAC PDU, the TX UE gives up a next transmission.

The following describes a configuration of DRX.

In an embodiment, before the first processing is performed, the method further includes:

The transmitting device configures a DRX configuration parameter of the receiving device based on a time division duplex TDD slot configuration.

The TDD slot configuration is indicated by a physical sidelink broadcast channel (Physical sidelink broadcast channel, PSBCH for short) load, and may include a slot configuration mode, a slot configuration period, and a slot that can be used for uplink transmission. The slot configuration period may take a value from 0.5 ms, 0.625 ms, 1 ms, 1.25 ms, 2 ms, 2.5 ms, 4 ms, 5 ms, 10 ms, or another value. The DRX configuration includes one or more groups of DRX configuration parameters. Each group of DRX configuration parameters includes at least: a time period (for example, a drx-onDurationTimer running period) in which the receiving UE monitors a sidelink, and a DRX cycle (drx-Cycle).

In an embodiment, that the transmitting device configures a DRX configuration parameter of the receiving device based on a time division duplex TDD slot configuration includes one of following two manners.

Manner 1:

When a quantity of slots that can be used for uplink transmission in a slot configuration period in the time division duplex TDD slot configuration is equal to the slot configuration period or is not less than a first threshold, a value of a timer related to a DRX active time is configured.

For example, the timer related to the DRX active time may include a DRX on duration timer (drx-onDurationTimer), a DRX retransmission timer (drx-RetransmissionTimer), and a DRX inactivity timer (drx-InactivityTimer).

In this embodiment, a quantity of slots that can be used for uplink transmission in the slot configuration period is equal to the slot configuration period, that is, all slots in the TDD slot configuration period are sidelink slots. In this case, when the transmitting UE or a network side configures a DRX configuration for the receiving UE, the TDD configuration may be not considered, and a value of drx-cycle and/or a timer such as drx-onDurationTimer may be set to enable the receiving UE to be in the active time.

Further, to ensure that on duration of a timer such as drx-onDurationTimer to enable the receiving UE to be in the active time can include sufficient available slots for SL transmission, in an embodiment, configuring the value of the timer related to the DRX active time includes:

configuring the value of the timer related to the DRX active time to be at least greater than or equal to a first value, a second value, or a sum of a first value and a second value, where the first value is a quantity of slots used for transmitting a sidelink synchronization signal S-SS or a physical sidelink broadcast channel PSBCH in each synchronization signal transmission period (for example, 160 ms), and the second value is a quantity of slots occupied for completing transmission of a service packet.

Manner 2:

When a quantity of slots that can be used for uplink transmission in the slot configuration period is not equal to the slot configuration period or is less than the first threshold, one of following is configured.

In a configuration 1, a value of a timer related to a DRX active time is configured to be greater than or equal to the slot configuration period.

For example, with reference to FIG. 9, the transmitting UE or a network side considers a TDD slot configuration, and sets a value of a timer such as drx-onDurationTimer to enable the receiving UE to be in the active time. Specifically, when the transmitting UE or the network side configures a DRX configuration for the receiving UE, a TDD slot configuration is considered. As shown in FIG. 9, a TDD slot configuration period is 10 ms/20 physical slots (every 20 physical slots are 10 ms), and a quantity of slots that can be used for uplink transmission in each period is 4. It is assumed that a preset threshold is 5 ms/10 physical slots, and the quantity of slots that can be used for uplink transmission in each period is less than the threshold. To ensure that the DRX active time includes sufficient sidelink slots (SL slots), the transmitting UE sets, the value of the timer such as drx-onDurationTimer to enable the receiving UE to be in the active time, to be greater than or equal to the slot configuration period. For example, a value of drx-onDurationTimer is set to be 10 ms.

In a configuration 2, a DRX cycle is configured to be greater than or equal to a second threshold.

The second threshold may be greater than, or less than or equal to a TDD slot period.

In a configuration 3, a DRX cycle is configured to be greater than or equal to the slot configuration period.

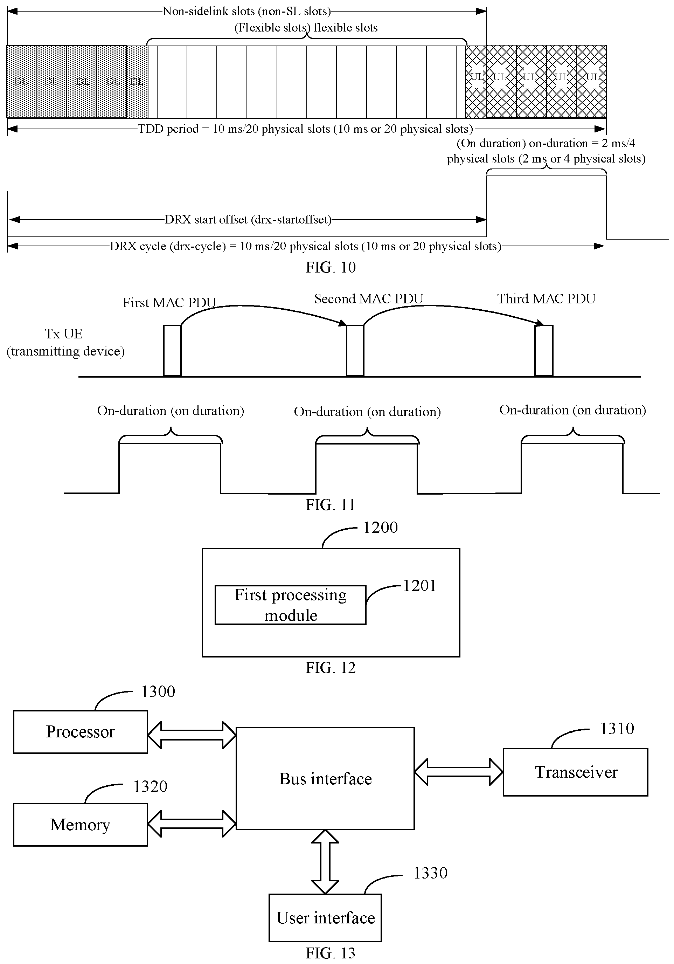

For example, when the transmitting UE or the network side configures a DRX configuration for the receiving UE, a TDD slot configuration is considered. As shown in FIG. 10, a TDD slot configuration period is 10 ms/20 physical slots (every 20 physical slots are 10 ms), a quantity of slots that can be used for uplink transmission in each period is 4, and 4 is less than the slot configuration period. To ensure that the DRX active time can include an SL slot, the transmitting UE sets a value of the DRX cycle (drx-cycle) to be greater than or equal to the slot configuration period. For example, a value of drx-cycle is set to be 10 ms.

Further, the transmitting UE or the network side may configure a DRX start offset (drx-startoffset) and/or a DRX slot offset (drx-slotoffset), so that on duration (on-Duration) can start in a sidelink SL slot; and configure a value of a timer such as drx-onDurationTimer to enable the receiving UE to be in the active time, so that the DRX active time can include SL slots as many as possible and non-sidelink slots (non-SL slots) as few as possible.

In a configuration 4, a value of a timer related to a DRX active time is configured to be greater than or equal to a third threshold.

The third threshold may be greater than, equal to, or less than a TDD slot period.

In the foregoing embodiment, when configuring the DRX cycle and/or the timer related to the DRX active time of the receiving UE, the transmitting device or the network side considers impact of a slot that cannot be used for sidelink transmission, to ensure that there is a resource that can be used for SL transmission in the DRX active time of the receiving device. In addition, the transmitting device performs an operation such as resource reselection/resource pool reselection or counter value reset when a reserved resource does not meet a requirement, to ensure that a resource selected by the transmitting device can be monitored by the receiving device, so that the receiving device can ensure reliable service reception and also meet a power saving requirement. This is more applicable to a discontinuous reception operation of a sidelink device with a power saving requirement.

The present disclosure further provides a resource selection process. This is specifically described as follows:

In an embodiment, before the transmission corresponding to the selected sidelink grant is performed, the following is further included:

The transmitting device obtains DRX configuration information of the receiving device.
The transmitting device performs resource selection based on the DRX configuration information of the receiving device.

In this embodiment, before performing resource selection, the transmitting UE needs to learn of the DRX configuration information of the receiving UE. The DRX configuration is one or more groups of DRX parameters. Each group of DRX parameters includes at least: a time period (for example, a running period of drx-onDurationTimer) in which the UE monitors a PSCCH (physical sidelink control channel) and 2nd SCI (sidelink control information), and a DRX cycle (drx-Cycle).

In an embodiment, a manner in which the transmitting device obtains the DRX configuration information of the receiving device includes but is not limited to one or more of the following:

the DRX configuration obtained by the transmitting device according to a pre-configuration,
the DRX configuration obtained by the transmitting device from a received SIB (System Information Block, system information block),
the DRX configuration obtained by the transmitting device from dedicated RRC signaling,
a default DRX configuration,
the DRX configuration transmitted to the receiving device, by the transmitting device, in a manner such as radio resource control (Radio Resource Control, RRC for short) reconfiguration signaling (RRC ReconfigurationSidelink).

After learning of the DRX configuration information of the receiving device, if there is a service packet to be transmitted, the transmitting device performs resource selection for the to-be-transmitted service packet according to the DRX configuration of the receiving device.

Specifically, performing resource selection based on the DRX configuration information of the receiving device includes the following three cases.

Case 1:

In an embodiment, if a MAC entity chooses to create a selected sidelink grant corresponding to transmission of a single MAC PDU, when the transmitting device performs resource selection, the transmitting UE determines that at least first $M'$ transmissions of the single MAC PDU are in the time in which the receiving UE is capable of performing sidelink reception. Herein, $N' \geq M' \geq 1$, and $N'$ is a total quantity of transmissions of the MAC PDU.

Specifically, in an embodiment, the time in which sidelink reception can be performed may include at least one of following:

the DRX active time of the receiving UE which is determined by the transmitting UE based on at least one of following: the DRX configuration of the receiving UE, a timer that is related to the DRX active time and that is currently started by the receiving UE, a timer that is related to the DRX active time and that is expected to be started by the receiving UE;
a logical slot in an available transmission resource pool of the transmitting UE.

Case 2:

In an embodiment, if a MAC entity chooses to create a selected sidelink grant corresponding to transmission of multiple MAC PDUs, when performing resource selection, the transmitting UE determines that at least first M" transmissions of a first MAC PDU of the multiple MAC PDUs are in the time in which the receiving UE is capable of performing sidelink reception. Herein, $N'' \geq M'' \geq 1$, and N" is a total quantity of transmissions of each MAC PDU.

Case 3:

Optionally, as shown in FIG. 11, in an embodiment, for a periodically reserved MAC PDU, when performing resource selection, the transmitting UE tries best to enable any transmission of a subsequent to-be-transmitted MAC PDU to be in the time in which the receiving UE is capable of performing sidelink reception.

In this embodiment, for the periodically reserved MAC PDU, it is best to enable a selected resource to fall within the DRX active time when resource selection is initially performed. If the selected resource cannot fall within the DRX active time, first processing is performed in this application before the transmission corresponding to the selected sidelink grant is performed, so that the transmission is in the time in which the receiving device is capable of performing sidelink reception.

Specifically, the time in which sidelink reception can be performed may include at least one of following:

the DRX active time of the receiving UE which is determined by the transmitting UE based on at least one of following: the DRX configuration of the receiving UE, a timer that is related to the DRX active time and that is currently started by the receiving UE, a timer that is related to the DRX active time and that is expected to be started by the receiving UE; a logical slot in an available transmission resource pool of the transmitting UE.

Embodiment 2

As shown in FIG. 12, an embodiment of the present disclosure provides a resource selection apparatus 1200. The apparatus is used in a transmitting device and includes:

a first processing module 1201, configured to perform first processing before transmission corresponding to a selected sidelink grant is performed, so that the transmission is in a time in which a receiving device is capable of performing sidelink reception.

Optionally, the first processing module 1201 includes:

a first processing submodule, configured to trigger transmission resource reselection if the transmission corresponding to the selected sidelink grant is not in a discontinuous reception DRX active time of the receiving device.

The first processing module 1201 includes:

a second processing submodule, configured to trigger transmission resource reselection if at least M transmission resources of the transmission corresponding to the selected sidelink grant are not in a DRX active time of the receiving device.

Herein, $N \geq M \geq 1$, and N is a total quantity of transmissions of the transmission corresponding to the selected sidelink grant.

Optionally, the first processing module 1201 includes:

a third processing submodule, configured to trigger transmission resource reselection if the transmission corresponding to the selected sidelink grant is not in a DRX active time of the receiving device, and a priority of the transmission is higher than or equal to a preset priority.

Optionally, the first processing module 1201 includes:

a fourth processing submodule, configured to trigger transmission resource reselection if the transmission corresponding to the selected sidelink grant is not in an available transmission resource pool of the transmitting device.

Optionally, the first processing module 1201 includes:

a fifth processing submodule, configured to trigger transmission resource reselection if the transmission corresponding to the selected sidelink grant is not in an available transmission resource pool of the transmitting device, and a priority of the transmission is higher than or equal to a preset priority.

Optionally, the first processing module 1201 includes:

a sixth processing submodule, configured to: if the transmission is corresponding to a current to-be-transmitted first MAC PDU, trigger transmission resource reselection for the first MAC PDU.

Optionally, the first processing module 1201 includes:

a seventh processing submodule, configured to if the transmission is corresponding to a current to-be-transmitted first MAC PDU, trigger reselection of a resource not in the DRX active time in a transmission resource corresponding to the first MAC PDU.

Optionally, the first processing module 1201 includes:

an eighth processing submodule, configured to: if the transmission is corresponding to a next to-be-transmitted second MAC PDU, set a value of a sidelink resource reselection counter to 1, and trigger transmission resource reselection for the second MAC PDU when the second MAC PDU is available.

Optionally, the first processing module 1201 includes:

a ninth processing submodule, configured to: if the transmission is corresponding to a next to-be-transmitted second MAC PDU, set a value of a sidelink resource reselection counter to 1, and trigger reselection of a resource not in the DRX active time in a transmission resource of the second MAC PDU.

Optionally, the first processing module 1201 includes:

a tenth processing submodule, configured to: if the transmission is corresponding to a next to-be-transmitted second MAC PDU, trigger transmission resource reselection for the second MAC PDU when the second MAC PDU is available.

Optionally, the first processing module 1201 includes:

an eleventh processing submodule, configured to: if the transmission is corresponding to a next to-be-transmitted second MAC PDU, perform reselection of a resource not in the DRX active time in a transmission resource corresponding to the second MAC PDU.

Optionally, the apparatus 1200 further includes:

a second processing module, configured to configure, by the transmitting device, a DRX configuration parameter of the receiving device based on a time division duplex TDD slot configuration.

Optionally, the second processing module includes:

a twelfth processing submodule, configured to: when a quantity of slots that can be used for uplink transmission in a slot configuration period in the time division duplex TDD slot configuration is equal to the slot configuration period or is not less than a first threshold, configure a value of a timer related to a DRX active time; or

a thirteenth processing submodule, configured to: when a quantity of slots that can be used for uplink transmission in the slot configuration period is not equal to the slot configuration period or is less than the first threshold, configure one of following:

configuring a DRX cycle to be greater than or equal to the slot configuration period;
configuring a DRX cycle to be greater than or equal to a second threshold;
configuring a value of a timer related to a DRX active time to be greater than or equal to the slot configuration period; and
configuring a value of a timer related to a DRX active time to be greater than or equal to a third threshold.

Optionally, the thirteenth processing submodule includes:

a first processing unit, configured to configure the value of the timer related to the DRX active time to be at least greater than or equal to a first value, a second value, or a sum of a first value and a second value, where the first value is a quantity of slots used for transmitting a sidelink synchronization signal S-SS or a physical sidelink broadcast channel PSBCH in each synchronization signal transmitting period, and the second value is a quantity of slots occupied for completing transmission of a service packet.

Optionally, the fourth processing submodule and the fifth processing submodule are further specifically configured to perform one of following:

randomly selecting a resource pool from a candidate resource pool; and
selecting a resource pool with most logical slots from the candidate resource pool.

Embodiment 2 of the present disclosure is corresponding to the method in Embodiment 1. All implementation means in Embodiment 1 are applicable to embodiments of the resource selection apparatus, and same technical effect can be achieved.

Embodiment 3

To better implement the foregoing objectives, as shown in FIG. 13, Embodiment 3 of the present disclosure further provides a terminal. The terminal includes:

a processor 1300, and a memory 1320 connected to the processor 1300 by using a bus interface, where the memory 1320 is configured to store a program and data that are used when the processor 1300 performs operations, and the processor 1300 invokes and executes the program and data that are stored in the memory 1320.

A transceiver 1310 is connected to the bus interface, and is configured to receive and transmit data under control of the processor 1300. The processor 1300 is configured to read a program in the memory 1320.

Specifically, the processor 1300 is configured to perform first processing before transmission corresponding to a selected sidelink grant is performed, so that the transmission is in a time in which a receiving device is capable of performing sidelink reception.

Optionally, the processor 1300 is configured to trigger transmission resource reselection if the transmission corresponding to the selected sidelink grant is not in a discontinuous reception DRX active time of the receiving device.

The processor 1300 is configured to trigger transmission resource reselection if at least M transmission resources of the transmission corresponding to the selected sidelink grant are not in a DRX active time of the receiving device.

Herein, $N \geq M \geq 1$, and N is a total quantity of transmissions of the transmission corresponding to the selected sidelink grant.

Optionally, the processor 1300 is configured to trigger transmission resource reselection if the transmission corresponding to the selected sidelink grant is not in a DRX active time of the receiving device, and a priority of the transmission is higher than or equal to a preset priority.

Optionally, the processor 1300 is configured to trigger transmission resource reselection if the transmission corresponding to the selected sidelink grant is not in an available transmission resource pool of the transmitting device.

Optionally, transmission resource reselection is triggered if the transmission corresponding to the selected sidelink grant is not in an available transmission resource pool of the transmitting device, and a priority of the transmission is higher than or equal to a preset priority.

Optionally, the processor 1300 is configured to: if the transmission is corresponding to a current to-be-transmitted first MAC PDU, trigger transmission resource reselection for the transmission of the first MAC PDU.

Optionally, the processor 1300 is configured to: if the transmission is corresponding to a current to-be-transmitted first MAC PDU, trigger reselection of a resource not in the DRX active time in a transmission resource corresponding to the first MAC PDU.

Optionally, the processor 1300 is configured to: if the transmission is corresponding to a next to-be-transmitted second MAC PDU, set a value of a sidelink resource reselection counter to 1, and trigger transmission resource reselection for the second MAC PDU when the second MAC PDU is available.

Optionally, the processor 1300 is configured to: if the transmission is corresponding to a next to-be-transmitted second MAC PDU, set a value of a sidelink resource reselection counter to 1, and trigger reselection of a resource not in the DRX active time in a transmission resource of the second MAC PDU.

Optionally, the processor 1300 is configured to: if the transmission is corresponding to a next to-be-transmitted second MAC PDU, trigger transmission resource reselection for the second MAC PDU when the second MAC PDU is available.

Optionally, the processor 1300 is configured to: if the transmission is corresponding to a next to-be-transmitted second MAC PDU, perform reselection of a resource not in the DRX active time in a transmission resource corresponding to the second MAC PDU.

Optionally, the processor 1300 is configured to configure, by the transmitting device, a DRX configuration parameter of the receiving device based on a time division duplex TDD slot configuration.

Optionally, the processor 1300 is configured to: when a quantity of slots that can be used for uplink transmission in a slot configuration period in the time division duplex TDD slot configuration is equal to the slot configuration period or is not less than a first threshold, configure a value of a timer related to a DRX active time; or

when a quantity of slots that can be used for uplink transmission in the slot configuration period is not equal to the slot configuration period or is less than the first threshold, configure one of following:

    configuring a DRX cycle to be greater than or equal to the slot configuration period;
    configuring a DRX cycle to be greater than or equal to a second threshold;
    configuring a value of a timer related to a DRX active time to be greater than or equal to the slot configuration period; and
    configuring a value of a timer related to a DRX active time to be greater than or equal to a third threshold.

Optionally, the processor 1300 is configured to configure the value of the timer related to the DRX active time to be at least greater than or equal to a first value, a second value, or a sum of a first value and a second value, where the first value is a quantity of slots used for transmitting a sidelink synchronization signal S-SS or a physical sidelink broadcast channel PSBCH in each synchronization signal transmitting period, and the second value is a quantity of slots occupied for completing transmission of a service packet.

Optionally, the processor 1300 is configured to: randomly select a resource pool from a candidate resource pool; or

select a resource pool with most logical slots from the candidate resource pool.

In FIG. 13, a bus architecture may include any quantity of interconnected buses and bridges, and specifically interconnect various circuits of one or more processors represented by the processor 1300 and a memory represented by the memory 1320. The bus architecture may further interconnect various other circuits such as a peripheral device, a voltage regulator, and a power management circuit. These are all well known in the art, and therefore are not further described in this specification. A bus interface provides an interface. The transceiver 1310 may be a plurality of components, that is, includes a transmitter and a transceiver; and provides units for communicating with various other apparatuses on a transmission medium. For different terminals, a user interface 1330 may alternatively be an interface capable of externally or internally connecting a required device, and the connected device includes, but is not limited to, a keypad, a display, a speaker, a microphone, a joystick, and the like. The processor 1300 is responsible for management of the bus architecture and general processing, and the memory 1320 may store data for use by the processor 1300 when the processor 1300 performs operations.

When configuring the timer related to the DRX cycle and/or the DRX active time of the receiving UE, the terminal provided in the present disclosure considers impact of a slot that cannot be used for sidelink transmission, to ensure that there is a resource that can be used for SL transmission in the DRX active time of the receiving device. In addition, the transmitting device performs an operation such as resource reselection/resource pool reselection or counter value reset when a reserved resource does not meet a requirement, to ensure that a resource selected by the transmitting device can be monitored by the receiving device, so that the receiving device can ensure reliable service reception and also meet a power saving requirement. This is more applicable to a discontinuous reception operation of a sidelink device with a power saving requirement.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, a specific embodiment of the present disclosure further provides a computer-readable storage medium, on which a computer program is stored. When the program is executed by a processor, steps of the method in Embodiment 1 are implemented. A same technical effect can be achieved. To avoid repetition, details are not described herein again.

In addition, it should be noted that, in the apparatus and method of the present disclosure, it is obvious that each component or step may be decomposed and/or recombined. In addition, the steps for performing the foregoing series of processing may be performed in a chronological order as described, but do not necessarily need to be performed in a chronological order, and some of the steps may be performed in parallel or independently of one another. A person of ordinary skill in the art can understand that all or any of the steps or components of the methods and apparatuses of the present disclosure may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the description of the present disclosure.

Therefore, the objectives of the present disclosure may also be achieved by running a program or a group of programs on any computing apparatus. The computing apparatus may be a well-known general apparatus. Therefore, the objectives of the present disclosure may also be achieved by providing only a program product including program code for implementing the methods or apparatuses. In other words, such a program product is also included in the present disclosure, and a storage medium that stores such a program product is also included in the present disclosure. Obviously, the storage medium may be any well-known storage medium or any storage medium developed in the future. It should also be noted that in the apparatuses and methods of the present disclosure, it is obvious that each component or step may be decomposed and/or recombined. In addition, the steps for performing the foregoing series of processing may be performed in a chronological order as described, but do not necessarily need to be performed in a chronological order. Some of the steps may be performed in parallel or independently of one another.

**Claims**

1. A resource selection method, applied to a transmitting device, comprising:

performing (101) first processing before transmission corresponding to a selected sidelink grant is performed, so that the transmission is in a time in which a receiving device is capable of performing sidelink reception, wherein resource selection method is **characterized in that**
the performing first processing comprises:

triggering transmission resource reselection if at least M transmission resources of the transmission corresponding to the selected sidelink grant are not in a DRX active time of the receiving device, wherein $N \geq M \geq 1$, and N is a total quantity of transmission resources of the transmission corresponding to the selected sidelink grant.

2. The resource selection method according to claim 1, wherein the triggering transmission resource reselection comprises:

if the transmission is corresponding to a current to-be-transmitted first medium access control protocol data unit, MAC PDU, triggering transmission resource reselection for the transmission of the first MAC PDU.

3. The resource selection method according to claim 1, wherein the triggering transmission resource reselection comprises:

if the transmission is corresponding to a current to-be-transmitted first MAC PDU, triggering reselection of a resource not in the DRX active time in a transmission resource corresponding to the first MAC PDU.

4. The resource selection method according to claim 1, wherein the triggering transmission resource reselection comprises:

if the transmission is corresponding to a next to-be-transmitted second MAC PDU, setting a value of a sidelink resource reselection counter to 1, and triggering transmission resource reselection for the second MAC PDU when the second MAC PDU is available.

5. The resource selection method according to claim 1, wherein the triggering transmission resource reselection comprises:

if the transmission is corresponding to a next to-be-transmitted second MAC PDU, setting a value of a sidelink resource reselection counter to 1, and triggering reselection of a resource not in the DRX active time in a transmission resource of the second MAC PDU.

6. The resource selection method according to claim 1, wherein the triggering transmission resource reselection comprises:

if the transmission is corresponding to a next to-be-transmitted second MAC PDU, triggering transmission resource reselection for the second MAC PDU when the second MAC PDU is available.

7. The resource selection method according to claim 1, wherein the triggering transmission resource reselection comprises:

if the transmission is corresponding to a next to-be-transmitted second MAC PDU, performing reselection of a resource not in the DRX active time in a transmission resource corresponding to the second MAC PDU.

8. The resource selection method according to claim 1, wherein before the performing first processing, the method further comprises:

configuring, by the transmitting device, a DRX configuration parameter of the receiving device based on a time division duplex, TDD, slot configuration;
wherein the configuring, by the transmitting device, a DRX configuration parameter of the receiving device based on a time division duplex, TDD, slot configuration comprises:

when a quantity of slots that is capable of used for uplink transmission in a slot configuration period in the time division duplex, TDD, slot configuration is equal to the slot configuration period or is not less than a first threshold, configuring a value of a timer related to a DRX active time; or
when a quantity of slots that is capable of used for uplink transmission in the slot configuration period is not equal to the slot configuration period or is less than the first threshold, configuring one of following:

configuring a DRX cycle to be greater than or equal to the slot configuration period;
configuring a DRX cycle to be greater than or equal to a second threshold;
configuring a value of a timer related to a DRX active time to be greater than or equal to the slot configuration period; and
configuring a value of a timer related to a DRX active time to be greater than or equal to a third threshold.

9. The resource selection method according to claim 8, wherein the configuring a value of a timer related to a DRX active time comprises:

configuring the value of the timer related to the DRX active time to be at least greater than or equal to a first value, a second value, or a sum of a first value and a second value, wherein the first value is a quantity of slots used for transmitting a sidelink synchronization signal, S-SS, or a physical sidelink broadcast channel, PSBCH, in each synchronization signal transmission period, and the second value is a quantity of slots occupied for completing transmission of a service packet.

10. A terminal, comprising a transceiver (1310), a memory (1320), a processor (1300), and a computer program stored in the memory and capable of being run on the processor, wherein when the processor executes the computer program, steps of the resource selection method according to any one of claims 1 to 9 are implemented.

**Patentansprüche**

1. Ressourcenauswahlverfahren, angewendet auf eine Übertragungsvorrichtung, das Folgendes umfasst:

   Durchführen (101) einer ersten Verarbeitung, bevor eine Übertragung, die einer ausgewählten Sidelink-Gewährung entspricht, durchgeführt wird, so dass die Übertragung in einer Zeit ist, in der eine Empfangsvorrichtung in der Lage ist, Sidelink-Empfang durchzuführen,
   wobei das Ressourcenauswahlverfahren **dadurch gekennzeichnet ist, dass** das Durchführen einer ersten Verarbeitung Folgendes umfasst:

   Auslösen einer Übertragungsressourcen-Neuauswahl, falls sich mindestens M Übertragungsressourcen der Übertragung, die der ausgewählten Sidelink-Gewährung entsprechen, nicht in einer DRX-aktiven Zeit der Empfangsvorrichtung befinden,
   wobei N ≥ M ≥ 1 ist und N eine Gesamtmenge von Übertragungsressourcen der Übertragung ist, die der ausgewählten Sidelink-Gewährung entspricht.

2. Ressourcenauswahlverfahren nach Anspruch 1, wobei die auslösende Übertragungsressourcen-Neuauswahl Folgendes umfasst:
   wenn die Übertragung einer aktuell zu übertragenden ersten Medienzugriffssteuerungs-Protokolldateneinheit (MAC PDU) entspricht, Auslösen einer Übertragungsressourcen-Neuauswahl für die Übertragung der ersten MAC PDU.

3. Ressourcenauswahlverfahren nach Anspruch 1, wobei die auslösende Übertragungsressourcen-Neuauswahl Folgendes umfasst:
   falls die Übertragung einer aktuell zu übertragenden ersten MAC-PDU entspricht, Auslösen einer Neuauswahl einer Ressource, die nicht in der DRX-aktiven Zeit ist, in einer Übertragungsressource, die der ersten MAC PDU entspricht.

4. Ressourcenauswahlverfahren nach Anspruch 1, wobei die auslösende Übertragungsressourcen-Neuauswahl Folgendes umfasst:
   falls die Übertragung einer nächsten zu übertragenden zweiten MAC PDU entspricht, Setzen eines Wertes eines Sidelink-Ressourcen-Neuauswahlzählers auf 1 und Auslösen einer Übertragungsressourcen-Neuauswahl für die zweite MAC PDU, wenn die zweite MAC PDU verfügbar ist.

5. Ressourcenauswahlverfahren nach Anspruch 1, wobei die auslösende Übertragungsressourcen-Neuauswahl Folgendes umfasst:
   falls die Übertragung einer nächsten zu übertragenden zweiten MAC PDU entspricht, Setzen eines Werts eines Sidelink-Ressourcen-Neuauswahlzählers auf 1 und Auslösen einer Neuauswahl einer Ressource, die nicht in der DRX-aktiven Zeit ist, in einer Übertragungsressource der zweiten MAC PDU.

6. Ressourcenauswahlverfahren nach Anspruch 1, wobei die auslösende Übertragungsressourcen-Neuauswahl Folgendes umfasst:
   falls die Übertragung einer nächsten zu übertragenden zweiten MAC PDU entspricht, Auslösen der Übertragungsressourcen-Neuauswahl für die zweite MAC PDU, wenn die zweite MAC PDU verfügbar ist.

7. Ressourcenauswahlverfahren nach Anspruch 1, wobei die auslösende Übertragungsressourcen-Neuauswahl Folgendes umfasst:
   falls die Übertragung einer nächsten zu übertragenden zweiten MAC PDU entspricht, Durchführen einer Neuauswahl einer Ressource, die nicht in der DRX-aktiven Zeit ist, in einer Übertragungsressource, die der zweiten MAC PDU entspricht.

8. Ressourcenauswahlverfahren nach Anspruch 1, wobei das Verfahren vor dem Durchführen einer ersten Verarbeitung ferner Folgendes umfasst:

Konfigurieren, durch die Übertragungsvorrichtung, eines DRX-Konfigurationsparameters der Empfangsvorrichtung basierend auf einer Zeitduplex-(TDD)-Slot-Konfiguration;
wobei das Konfigurieren, durch die Übertragungsvorrichtung, eines DRX-Konfigurationsparameters der Empfangsvorrichtung basierend auf einer Zeitduplex-(TDD)-Slot-Konfiguration Folgendes umfasst:

wenn eine Anzahl von Slots, die zur Uplink-Übertragung in einer Slot-Konfigurationsperiode in der Zeitduplex-(TDD)-Slot-Konfiguration verwendet werden können, gleich der Slot-Konfigurationsperiode ist oder nicht kleiner als ein erster Schwellenwert ist, Konfigurieren eines Werts eines Timers in Bezug auf eine aktive DRX-Zeit; oder
wenn eine Anzahl von Slots, die zur Uplink-Übertragung in der Slot-Konfigurationsperiode verwendet werden können, nicht gleich der Slot-Konfigurationsperiode ist oder kleiner als der erste Schwellenwert ist, Konfigurieren eines der Folgenden:

Konfigurieren eines DRX-Zyklus so, dass er größer als oder gleich der Slot-Konfigurationsperiode ist;
Konfigurieren eines DRX-Zyklus so, dass er größer als oder gleich einem zweiten Schwellenwert ist;
Konfigurieren eines Werts eines Timers, der sich auf eine aktive DRX-Zeit bezieht, so dass er größer als oder gleich der Slot-Konfigurationsperiode ist; und
Konfigurieren eines Werts eines Timers, der sich auf eine aktive DRX-Zeit bezieht, so dass er größer oder gleich einem dritten Schwellenwert ist.

9. Ressourcenauswahlverfahren nach Anspruch 8, wobei das Konfigurieren eines Werts eines Timers in Bezug auf eine aktive DRX-Zeit Folgendes umfasst:
Konfigurieren des Werts des Timers in Bezug auf die DRX-aktive Zeit, so dass er mindestens größer als oder gleich einem ersten Wert, einem zweiten Wert oder einer Summe eines ersten Werts und eines zweiten Werts ist, wobei der erste Wert eine Anzahl von Slots ist, die zum Übertragen eines Sidelink-Synchronisationssignals (S-SS) oder eines physischen Sidelink-Broadcast-Kanals (PSBCH) in jeder Synchronisationssignal-Übertragungsperiode verwendet werden, und der zweite Wert eine Anzahl von Slots ist, die zum Abschließen der Übertragung eines Dienstpakets belegt sind.

10. Endgerät, das einen Transceiver (1310), einen Speicher (1320), einen Prozessor (1300) und ein Computerprogramm umfasst, die in dem Speicher gespeichert sind und in der Lage sind, auf dem Prozessor ausgeführt zu werden, wobei, wenn der Prozessor das Computerprogramm ausführt, Schritte des Ressourcenauswahlverfahrens nach einem der Ansprüche 1 bis 9 implementiert werden.

**Revendications**

1. **Procédé** de sélection de ressource, appliqué à un dispositif émetteur, comprenant :

la réalisation (101) d'un premier traitement avant la réalisation d'une transmission correspondant à une attribution préalable en liaison latérale sélectionnée, de sorte que la transmission s'effectue au moment où un dispositif récepteur est apte à réaliser une réception en liaison latérale,
le procédé de sélection de ressource étant **caractérisé en ce que** la réalisation d'un premier traitement comprend :

le déclenchement d'une resélection de ressource de transmission si au moins M ressources de transmission de la transmission correspondant à l'attribution préalable en liaison latérale sélectionnée ne s'inscrivent pas dans une période d'activité DRX du dispositif récepteur,
N ≥ M ≥ 1, et N représentant une quantité totale de ressources de transmission de la transmission correspondant à l'attribution préalable en liaison latérale sélectionnée.

2. Procédé de sélection de ressource selon la revendication 1, dans lequel le déclenchement d'une resélection de ressource de transmission comprend :
si la transmission correspond à une première unité de données de protocole de contrôle d'accès au support, MAC PDU, courante à transmettre, le déclenchement d'une resélection de ressource de transmission pour la transmission de la première MAC PDU.

3. Procédé de sélection de ressource selon la revendication 1, dans lequel le déclenchement d'une resélection de ressource de transmission comprend :

si la transmission correspond à une première MAC PDU courante à transmettre, le déclenchement d'une resélection d'une ressource qui ne s'inscrit pas dans la période d'activité DRX dans une ressource de transmission correspondant à la première MAC PDU.

4. Procédé de sélection de ressource selon la revendication 1, dans lequel le déclenchement d'une resélection de ressource de transmission comprend :

si la transmission correspond à une deuxième MAC PDU suivante à transmettre, la mise à 1 d'une valeur d'un compteur de resélection de ressource en liaison latérale, et le déclenchement d'une resélection de ressource de transmission pour la deuxième MAC PDU lorsque la deuxième MAC PDU est disponible.

5. Procédé de sélection de ressource selon la revendication 1, dans lequel le déclenchement d'une resélection de ressource de transmission comprend :

si la transmission correspond à une deuxième MAC PDU suivante à transmettre, la mise à 1 d'une valeur d'un compteur de resélection de ressource en liaison latérale, et le déclenchement d'une resélection d'une ressource qui ne s'inscrit pas dans la période d'activité DRX dans une ressource de transmission de la deuxième MAC PDU.

6. Procédé de sélection de ressource selon la revendication 1, dans lequel le déclenchement d'une resélection de ressource de transmission comprend :

si la transmission correspond à une deuxième MAC PDU suivante à transmettre, le déclenchement d'une resélection de ressource de transmission pour la deuxième MAC PDU lorsque la deuxième MAC PDU est disponible.

7. Procédé de sélection de ressource selon la revendication 1, dans lequel le déclenchement d'une resélection de ressource de transmission comprend :

si la transmission correspond à une deuxième MAC PDU suivante à transmettre, la réalisation d'une resélection d'une ressource qui ne s'inscrit pas dans la période d'activité DRX dans une ressource de transmission correspondant à la deuxième MAC PDU.

8. Procédé de sélection de ressource selon la revendication 1, le procédé comprenant en outre, avant la réalisation d'un premier traitement :

la configuration, par le dispositif émetteur, d'un paramètre de configuration DRX du dispositif récepteur sur la base d'une configuration de slots en duplex par répartition dans le temps, TDD ;
la configuration, par le dispositif émetteur, d'un paramètre de configuration DRX du dispositif récepteur sur la base d'une configuration de slots en duplex par répartition dans le temps, TDD, comprenant :

lorsqu'une quantité de slots susceptibles d'être utilisés pour une transmission en liaison montante dans une période de configuration de slots dans la configuration de slots en duplex par répartition dans le temps, TDD, est égale à la période de configuration de slots ou n'est pas inférieure à un premier seuil, la configuration d'une valeur d'un temporisateur lié à une période d'activité DRX ; ou
lorsqu'une quantité de slots susceptibles d'être utilisés pour une transmission en liaison montante dans la période de configuration de slots n'est pas égale à la période de configuration de slots ou est inférieure au premier seuil, la configuration comprenant l'une des options suivantes :

la configuration d'un cycle DRX pour qu'il soit supérieur ou égal à la période de configuration de slots ;
la configuration d'un cycle DRX pour qu'il soit supérieur ou égal à un deuxième seuil ;
la configuration d'une valeur d'un temporisateur lié à une période d'activité DRX pour qu'elle soit supérieure ou égale à la période de configuration de slots ; et
la configuration d'une valeur d'un temporisateur lié à une période d'activité DRX pour qu'elle soit supérieure ou égale à un troisième seuil.

9. Procédé de sélection de ressource selon la revendication 8, dans lequel la configuration d'une valeur d'un temporisateur lié à une période d'activité DRX comprend :

la configuration de la valeur du temporisateur lié à la période d'activité DRX pour qu'elle soit au moins supérieure ou égale à une première valeur, à une deuxième valeur, ou à la somme d'une première valeur et d'une deuxième valeur, la première valeur étant une quantité de slots utilisés pour transmettre un signal de synchronisation en liaison latérale, S-SS, ou un canal physique de diffusion en liaison latérale, PSBCH, dans chaque période de transmission de signal de synchronisation, et la deuxième valeur étant une quantité de slots occupés pour achever la transmission d'un paquet de service.

10. Terminal, comprenant un émetteur-récepteur (1310), une mémoire (1320), un processeur (1300), et un programme d'ordinateur stocké dans la mémoire et apte à être exécuté sur le processeur, l'exécution du programme d'ordinateur par le processeur entraînant la mise en œuvre des étapes du procédé de sélection de ressource selon l'une quelconque des revendications 1 à 9.

UE monitors a
PDCCH

On duration
(On DUration)

Non-on duration
(Opportunity for DRX)

←————————DRX cycle————————→

FIG. 1

Performing first processing before transmission
corresponding to a selected sidelink grant is performed, so
that the transmission is in a time in which a receiving
device is capable of perform sidelink reception

101

FIG. 2

Previous PDU

Current PDU    Reselected resource

Transmitting device
(Tx UE)

On duration (on-duration)

On duration (on-duration)

FIG. 3

Current PDU

Next PDU    Reselected resource

Transmitting device
(Tx UE)

On duration (on-duration)

On duration (on-duration)

FIG. 4

FIG. 5

FIG. 6

FIG. 7

EP 4 395 423 B1

FIG. 8

FIG. 9

Non-sidelink slots (non-SL slots)
(Flexible slots) flexible slots

TDD period = 10 ms/20 physical slots (10 ms or 20 physical slots)

(On duration) on-duration = 2 ms/4
physical slots (2 ms or 4 physical slots)

DRX start offset (drx-startoffset)

DRX cycle (drx-cycle) = 10 ms/20 physical slots (10 ms or 20 physical slots)

FIG. 10

First MAC PDU          Second MAC PDU          Third MAC PDU

Tx UE
(transmitting device)

On-duration (on duration)     On-duration (on duration)     On-duration (on duration)

FIG. 11

1200

First processing
module               1201

FIG. 12

1300

Processor

1320                    Bus interface               1310

Memory                                            Transceiver

1330

User interface

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021138789 A1